# EUROPEAN PATENT APPLICATION

(11) **EP 2 833 283 A1**
(43) Date of publication of application: **04.02.2015**
(21) Application number: 13178571.9
(22) Date of filing: 30.07.2013
(51) Int. Cl.: G06F 17/50

(54) **Low power verification method for a circuit description and system for automating a minimization of a circuit description**

(71) Applicant: Synopsys, Inc., Mountain View, California 94043 (US)
(72) Inventor: Senapati, Dipti Ranjan, 751012 Bhubaneswar (IN); De, Kaushik, 560103 Bangalore (IN); Mukherjee, Rajarshi, 560067 Bangalore (IN); Ramachandra, Shreedhar, 560043 Bangalore (IN)
(74) Representative: Epping - Hermann - Fischer

(57) **Abstract**

A method for low power verification of a circuit description comprises minimizing a circuit description by creating a plurality of crossover trees, and evaluating each of the plurality of crossover trees to identify circuit description errors, in particular low power circuit description errors. The minimizing may comprise creating a plurality of crossover trees to represent circuit description, wherein each crossover tree has a unique set of selected ports and gates of the circuit description.

## Description

### BACKGROUND

### 1. Field

This invention relates to the art of electronic design automation (EDA), and more specifically to an automated design process and chip description system.

### 2. Related Art

Battery life is a critical factor for success of a mobile product. Hence every silicon chip now provides low power functionality as a method to extend the battery life. Low power functionality may be provided in practice by shutting down part of the chip to save leakage power and designing the chip to have multiple voltage domains where different domains can operate at different power states to provide either performance (at the price of high power consumption) or low power consumption (with a lower level of performance).

When a chip has multiple functional blocks, many of the blocks can be switched off or while other blocks can be powered at a variety of different power levels. Clearly, at any instance, the number of possible combinations of different functional blocks turning off or transitioning to a voltage state can be very large in modem chips.

Since defects in the low power functionality can cause chips to malfunction, every chip need to be verified to ensure that for all possible power states (that is, the combination of functional blocks switched off or set to a low voltage state) to ensure that the chip behaves correctly. One way to perform the verification is to identify all of the circuit paths in a chip which are involved in crossing from one power domain. Then the verification process can be reduced to verifying that the circuit paths function correctly for all possible combinations of voltage state for each power domains.

Analysis of all these crossover paths, with each path having large number of elements will be expensive in terms of runtime. Searching through a large design, which e.g. includes tens of millions of logic gates or more, to find all these paths may be very expensive if it has to be done again and again.

What is needed is an improved concept to identify and handle all such paths efficiently so that no path that crosses from one power domain to another is missed and that low power errors in the chip can be found and eliminated.

### SUMMARY

Such an improved concept is achieved with the subject-matter of the independent claims. Developments and embodiments are subject-matter of the dependent claims.

The improved concept is based on the idea that instead of using a full circuit description, a sparse representation of paths, in particular low power crossover paths in the form of trees with branches is generated from the circuit description with only important nodes of the circuit design, for instance the nodes that are at least necessary. Hence, the full circuit description is reduced to a plurality of crossover trees, which is independent of each other and do not have any nodes in common.

In an embodiment of the improved concept, a crossover tree concisely represents the crossover paths that are required to perform a low power analysis efficiently and to quickly identify low power design issues. In addition, this representation needs very low foot-print, that enable user to run the tool in machines with smaller amount of memory, instead of requiring to purchase very expensive machines with a large amount of memory.

According to one embodiment of the improved concept, a method for low power verification of a circuit description comprises minimizing a circuit description by creating a plurality of crossover trees, and evaluating each of the plurality of crossover trees to identify circuit description errors, in particular low power circuit description errors.

For example, the minimizing step comprises creating a plurality of crossover trees to represent a circuit description. Therein, each crossover tree has a unique set of selected ports and gates of the circuit description.

In some embodiments, the evaluating step comprises evaluating, for each of the plurality of crossover trees, the circuit functions of the selected ports and gates for at least one of a selected plurality of circuit parameters. Low power errors in the circuit description are identified based on the evaluation. For example, identifying low power errors comprises providing a set of rules and evaluating the circuit functions of the selected ports and gates to at least one of the rules in the set of rules for each of the plurality of circuit parameters.

According to some implementations, the creation of each of the plurality of crossover trees may be performed as described in the following. Power domain boundary ports in the circuit design are identified. For each identified power domain port, it is checked whether said port is already covered by any other crossover tree. For example, if said port is already covered by any other crossover tree, no further action may have to be taken and it may be continued with the next identified power domain boundary port. In other words, such a port will not be the basis of a crossover tree generation. However, if said port is not covered by any other crossover tree, a circuit path of the circuit description is traced backwards from said port. The tracing backwards is stopped when a complex gate is found on the circuit path or when a primary input of the overall circuit design is reached. In case of a backward tracing stop, the backward stopping node is marked on the circuit design as a root node of the crossover tree. From said root node it is traced forward within the circuit description, and it is continued tracing unit a complex logic gate is found or a primary output of the overall circuit design is reached. Such a forward stopping node is marked as one of a number of sink nodes of the crossover tree on the circuit design. The forward tracing from said root node is repeated until all possible circuit paths from said root node are traced.

Accordingly, a number of nodes of the circuit description are left out in the several circuit paths, respectively branches of the crossover tree. In particular, the omission of these nodes and generation of the crossover tree are performed in a single pass.

It hence becomes apparent that each circuit path being traced from the root node to one of the sink nodes ends in a branch of one of the crossover trees. In other words, each crossover tree comprises at least one circuit path of the original circuit design.

Preferably, said port from which the backward tracing starts, is marked as covered by the current crossover tree. Furthermore, when a power domain boundary port is found during the forward tracing, said port preferably is also marked as covered by the current crossover tree.

According to various implementations, each crossover tree is formed for the following elements: The root node of the crossover tree, all sink nodes of the crossover tree, all power domain boundary ports of the crossover tree that have an isolation specification and/or a level shifter specification, all isolation cells of the crossover tree, all level shifter cells of the crossover tree, all buffer cell chains and inverter chains of the crossover tree having a supply change between their ends.

In various embodiments, identified low power errors may be displayed, for example in order to enable a correction of the circuit design.

Preferably, the evaluation of the plurality of crossover trees and the identification of circuit description errors is performed in parallel.

In the embodiments described above the plurality of crossover trees may be created from a register transfer level, RTL, description, from a hardware description language, HDL, description, from a net list description, in particular a placed and routed net list description. Preferably, the circuit description errors to be identified are low power violations of the circuit description.

According to a further embodiment of the improved concept, a method for low power verification of a circuit description is provided. Such a method comprises generating a compact design representation of groups of interesting nodes and evaluating the groups of interesting nodes in parallel, wherein the compact design representation is independent of a low power specification language. For example, such a compact design representation may be performed with the crossover tree representation described above.

The various embodiments described above may be implemented as a computer program product. For example, an embodiment of a computer program product comprises a code that is configured to implement a method according to one of the embodiments described above.

According to the improved concept, a data carrier may comprise such a computer program product being configured to implement one of the verification methods described above.

In another embodiment according to the improved concept, a system for automating a minimization of a circuit description for evaluation purposes, in particular low power error evaluation purposes is disclosed. The system has a processor being adapted to minimize the circuit description by creating a plurality of crossover trees. Therein the creation of each of the plurality of crossover trees is performed according to one of the implementations of the crossover tree generation described above.

### BRIEF DESCRIPTION OF THE DRAWINGS

- Figure 1: illustrates various steps in the design and fabrication of an integrated circuit.
- Figure 2: is a block diagram showing an example of design nodes in a circuit path that are required for determining a low power crossing path in accordance with an embodiment of the invention.
- Figure 3: is a simplified block diagram of Figure 2 further showing an example of identified crossover tree nodes for a low power crossing path in accordance with an embodiment of the invention.
- Figure 4: is a block diagram showing an example of design nodes in a circuit arrangement with several low power crossing paths forming a tree structure
- Figure 5: is a simplified diagram showing an example of a crossover tree representation and a corresponding link to a design representation in accordance with an embodiment of the invention.
- Figure 6: is a flow chart showing steps in an automated multiple voltage/power state design process in accordance with an embodiment of the invention.

### DETAILED DESCRIPTION

The following serves as a glossary of terms as used in the description of the invention herein:
Logic Gate: Smallest building blocks in technology libraries using which the design is built. They are gates like buffer, inverter, AND gates, OR gates, flip-flops, latches, etc.
Complex Gate: Logic Gate which is not buffer, inverter, isolation cell or level-shifter cell.
Logic Blocks: Design elements created by logic designers using Logic Gates and interconnections. Design is comprised of combinations and interconnection Logic Blocks.
Logic Ports: Through these points Logic Blocks sends or receives signals from other Logic Blocks.
Voltage island or voltage domain: A partition of the design which derives its power supply from a source not shared with another partition. Such a partition influences the interaction of electrical signals in a voltage island with those of another or among themselves. Such a partition also influences the stability of operation of a voltage island as voltage control is exercised. By way of illustration, the design may include a plurality of logic blocks whose power can go off when other blocks are on, or can be driven by different voltages at different times during operations. When a group of Logic Blocks are defined as a power domain, all Logic Blocks contained by the group belong to the same power domain, unless otherwise specified.
Voltage/Power State: The state of a set of voltage islands or voltage domains at a point in time.
Power Domain Boundary Port: Logic port on a Logic Block, which constitutes a power domain transition between different voltage domains or power domains.
SoC: System on a Chip, refers to a complex chip or Integrated Circuit (IC) with varied circuit types in it.
Tools: refers generally to programs that accomplish or aid the automation of design tasks, for example, EDA tools or scripts that are used for IC design tasks.

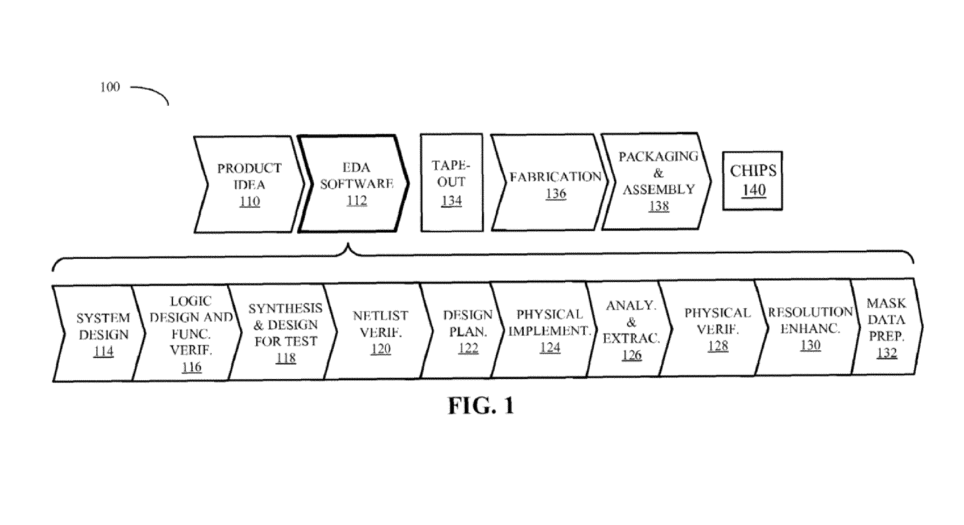

Figure 1 illustrates various steps in the design and fabrication of an integrated circuit. The process starts with a product idea 110, which is realized using Electronic Design Automation (EDA) software 112. Chips 140 can be produced from the finalized design, e.g. in the form of a tape-out 134, by performing fabrication 136 and packaging and assembly 138 steps.

A design flow that uses EDA software 110 is described below. Note that the design flow description is for illustration purposes only, and is not intended to limit the present invention. For example, an actual integrated circuit design may require a designer to perform the design flow steps in a different sequence than the sequence described below.

In the system design step 114, the designers can describe the functionality to implement. They can also perform what-if planning to refine the functionality and to check costs. Further, hardware-software architecture partitioning can occur at this step. In the logic design and functional verification step 116, a Hardware Description Language (HDL) design can be created and checked for functional accuracy.

In the synthesis and design step 118, the HDL code can be translated to a netlist, which can be optimized for the target technology. Further, tests can be designed and implemented to check the finished chips. In the netlist verification step 120, the netlist can be checked for compliance with timing constraints and for correspondence with the HDL code.

In the design planning step 122, an overall floor plan for the chip can be constructed and analyzed for timing and top-level routing. Next, in the physical implementation step 124, placement and routing can be performed.

In the analysis and extraction step 126, the circuit functionality can be verified at a transistor level. In the physical verification step 128, the design can be checked to correct any functional, manufacturing, electrical, or lithographic issues.

In the resolution enhancement step 130, geometric manipulations can be performed on the layout to improve manufacturability of the design. Finally, in the mask data preparation step 132, the design can be taped-out 134 for production of masks to produce finished chips.

While the above described EDA design flow is sufficient to allow the design of very complex SoCs, it is noted that the number of the circuit paths in a chip that cross from one power domain to another may be larger than tens of millions. Each such path that crosses from one power domain to another is known in the art as a "crossover path" and in modem chip designs the number of such crossover paths is very large and growing.

To ensure there are no low power errors or low power violation in these crossover paths, one needs to identify these paths and traverse over several times. First one needs to find the driver of the path. Low power violations are design and specification problems which can cause mal-function of the semiconductor device due to a mismatch in power domain states. Second find all the sinks (logic gates which are at the end of the paths) to ensure if the low power strategies seen on a specific crossover path are applicable. For this to work correctly, one has to look at all sinks on all paths originating from the identified source. Then traverse each crossover path again and identify any low power violation present in the path. Later during user debug of any low power violation, the user can query about any specific path; source, sink, the gates or the like.

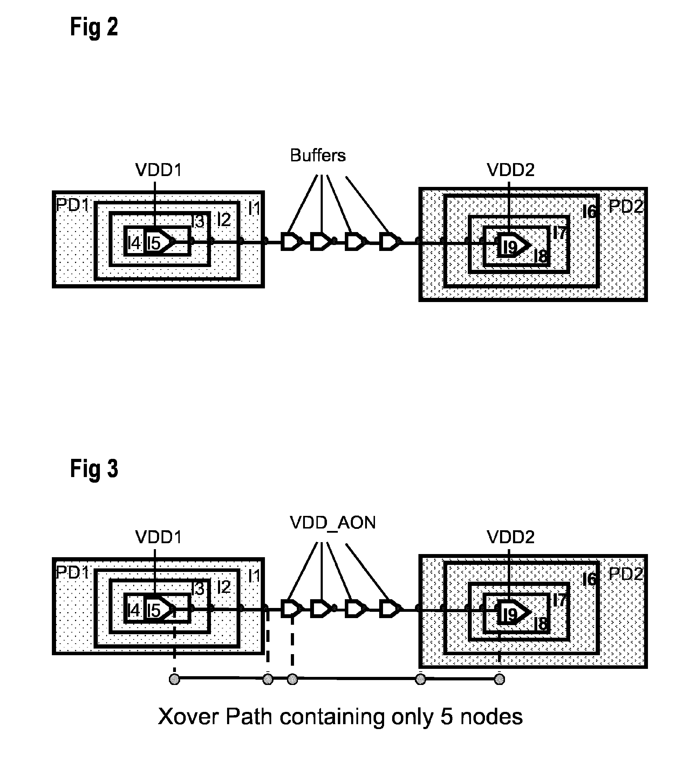

Referring now to Figure 2, an illustration of a circuit path that crosses over multiple power domains is shown. As can readily be envisioned, each path can have large number of logic gates, due to buffers inserted by synthesis and placement and routing, P&R, tools. Indeed, some EDA synthesis tools will insert 50-100 of buffers in series between two voltage islands. In addition to the large number of logic gates, there will be hierarchical ports, isolation cells, level-shifter cells and the like in a typical SoC circuit design.

Figure 3 shows the circuit path of Figure 2 but further identifies certain elements which are not needed to be represented in the crossover path because many elements have similar properties and a single representative element will suffice. It will be appreciated that not all elements in the network are needed for representing the crossover path. Defining a crossover tree will concisely represent all interesting paths needed for low power analysis for a given circuit path.

In accordance with an embodiment of the present invention, a crossover tree creation method starts by identifying power domain boundary ports in a circuit design. For each power domain boundary port, a verification tool checks if that port is already covered by any other crossover tree. If already covered, the tool does not have to further process the selected port, because no crossover tree should overlap with another. That is, in accordance with the present invention, each crossover tree comprises a unique set of ports and gates.

If not covered, the verification tool traces the circuit path backwards in the logic structure from this port, in particular trace through the following type of logic gates: buffer, inverter, isolation cells, level-shifter cells. The tracing also goes through other logic Ports and Power Domain Boundaries. Tracing is stopped when a complex gate is found on the path, or a primary input of the overall design is reached. It is intended to mark this point on the design as a root node of this current crossover tree.

Then it is started tracing forward from this root node, and continued tracing until complex gates are encountered or primary outputs of the design are reached. During this forward tracing also the path, through which backward tracing was performed, will be covered, but potentially many more paths. All the nodes where it is stopped tracing are denoted as sink nodes of this current crossover tree. During forward tracing, if any power domain boundary ports are encountered, they are marked as "covered" in the current crossover tree, so that no new tree is formed from those ports or gates.

Then each crossover tree is formed for the following elements:
a. the root node of the crossover tree.
b. All power domain boundary ports which have any Unity Power Format, UPF strategy. UPF Strategies are user specifications to describe if and when isolation and level-shifter cells need to be inserted at this port. Such strategies per se are generally well known in the art. The UPF is for instance described in Standard IEEE 1801-2009.
c. All isolation and level-shifter cells
d. All buffer and inverter cells where there is a supply change from the driver. If a series or chain of buffers/inverters being present is powered by same supply, then only the first and the last are kept. This leads to big compaction in crossover tree size.
e. All sink nodes

Preferably, all the nodes in crossover tree have pointers to corresponding design nodes so that any algorithm can easily access the design nodes to access other design related information. However, for Low Power evaluation, crossover tree data representation is sufficient for circuit design verification.

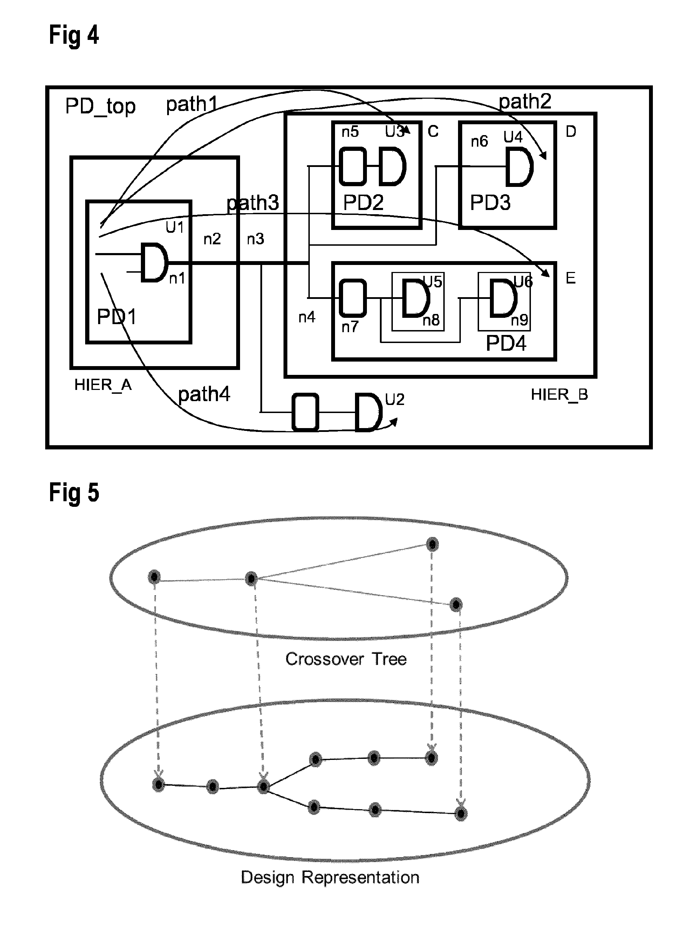

While Figure 2 and Figure 3 show sparse representations of a single circuit path, Figure 4 shows an example of design nodes in a circuit arrangement with several low power crossing paths forming a tree structure. For example, the circuit arrangement has a top power domain PD_top, in which two hierarchies HIER_A, HIER_B are arranged. In the first hierarchy HIER_A, a first power domain PD1 is placed having a cell U1 and a node n1. A root node of a potential crossover tree is located in the first power domain PD 1.

The second hierarchy HIER_B comprises further power domains PD2, PD3, PD4, each having respective cells and elements placed therein. Additionally, some cells are placed in the top power domain PD_TOP.

Several paths can be formed starting from the root node to respective sink nodes to be identified in the other power domains. For example, a first path path1 ends in the power domain PD2, e.g. at cell U3 or node n5. A second path path2 may end in the third power domain PD3 at cell U4 or node n6. A third path path3 may end within the fourth power domain PD4, neglecting some of the cells U5, U6 and nodes n7, n8, n9. A fourth crossover path may end at the cell U2 in the top power domain PD_TOP.

It should be noted that the arrangement in Figure 4 is just an example for a possible tree representation, wherein the compaction of representation has not yet been performed. However, such compaction will be apparent from the description of the crossover tree generation described above. It should be noted that any nodes that are part of the branches of the tree of Figure 4, in particular the paths path1, path2, path3, path4, cannot be part of any other crossover tree within a circuit description. It is hence obvious that the arrangement of Figure 4 only is a part of a more complex circuit description having many more circuit arrangements or interdependencies.

Figure 5 is a crossover tree representation illustrating the link to a corresponding design representation after applying the above described method.

Once crossover trees are created, low power analysis will happen only on the crossover tree, in particular not on the full circuit description. This improves the runtime because of compact and sufficient representation of all low power crossing paths. All trees can be analyzed independently, because the crossover trees are maximal in the sense of that no tree overlaps with another tree. Then for each crossover tree, the following steps are performed in low power analysis:
Step 1: root node and sink nodes are analyzed together to identify all UPF strategies present in the crossover trees are applicable for this tree. This may only be done correctly if all sinks are analyzed simultaneously. This is the reason the tree representation is beneficial.
   Then the UPF strategies present in the crossover trees are matched to existing low power cells, e.g. isolation elements or level-shifters.
Step 2: For each path in the crossover tree, the entire path is analyzed for low power violations.
   As will be appreciated, the type of low power check for violations is not described here as that is typically specific to each individual design and is beyond the scope of this disclosure. However, such low power checks are known in the art.

The following are the advantages of crossover trees.
1. Compact Representation
   a. Only relevant nodes are kept, as shown in Figure 3.
   b. A compaction of representation e.g. from 250GB to 7.5GB in a industrial test case was seen with application of the present invention, because of tree representation and minimal number of nodes in each crossover tree. In general, a reduction of about 2 orders of magnitude is achievable.
2. Trees are independent
   a. maximal parallelism possible, all trees can be processed in parallel. This will speedup low power analysis time.
3. Design Representation independent
   a. Underlying design representation can be anything, so low power algorithms can be ported to any design representation
   b. Independent of low power specification language as well.

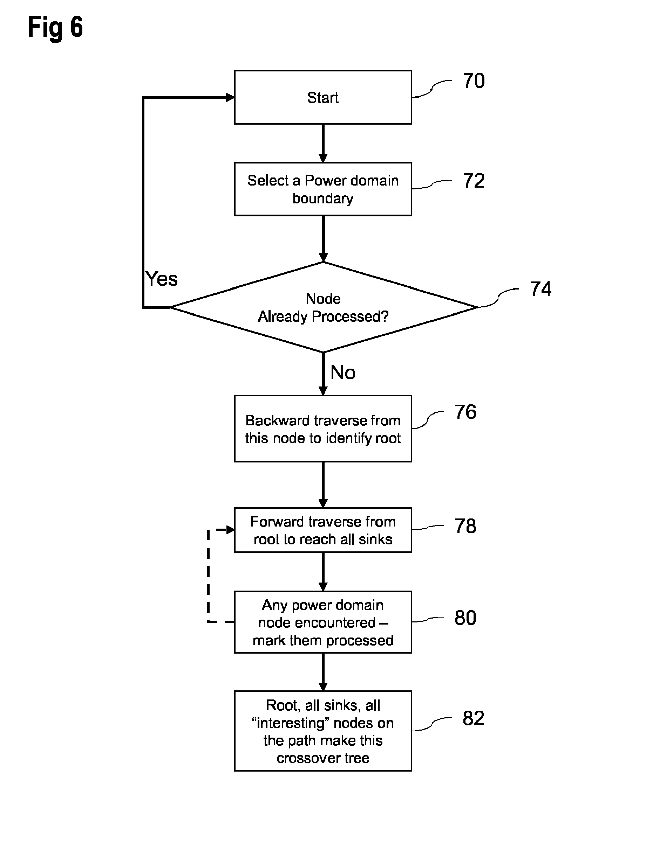

Figure 6 shows an example of a flow chart showing steps of the generation of one of a plurality of crossover trees according to the improved concept. The generation starts in block 70 for a potential new crossover tree definition. In block 72, one power domain boundary port is picked, for example from a list of identified power domain boundary ports of the circuit design.

In block 74 it is checked whether the selected power domain boundary port is already processed earlier as a part of another crossover tree. In this case, it is returned to block 70 to start over for selecting another power domain boundary port. However, if the selected node is not already processed, it is traversed backward from this node to identify a root node in block 76. To this end, the tracing goes through logic ports, buffers, isolation cells, level shifters etc. and it is stopped at first complex gate being found. This complex gate, respectively this node, is marked as a root node of the crossover tree.

In block 78, it is traversed forward from the root node along a low power circuit path, which may be one of several possible circuit paths. Each such circuit path forms a branch of the crossover tree. When tracing through the circuit path, it is continued tracing until a complex logic gate is found or a primary output of the overall circuit design is reached. In particular, the tracing goes through logic ports, buffers, isolation cells and level shifters. The stopping point in the forward tracing is marked as a sink node of the branch, respectively the crossover tree.

In block 80 it is defined that any power domain boundary ports which are crossed in the forward tracing are marked as covered by the current crossover tree. This prevents that the same power domain boundary port is processed more than once. Blocks 78 and 80 may be performed several times, until all possible circuit paths starting from the root node are covered.

Finally, in block 82 the root node, all sink nodes and all other "interesting" nodes as described above are marked as forming the crossover tree.

The whole procedure defined in the flow chart of Figure 6 may be repeated until no further uncovered power domain boundary ports are left and the plurality of crossover trees is created.

The foregoing described embodiments of the invention are provided as illustrations and descriptions. They are not intended to limit the invention to the precise form described. In particular, it is contemplated that functional implementations of the invention described herein may be implemented equivalently in hardware, software, firmware, and/or other available functional components or building blocks, and that networks may be wired, wireless, or a combination of wired and wireless. Other variations and embodiments are possible in light of the above teachings. This, it is intended that the scope of invention is not limited by this Detailed Description, but rather by the following claims.

## Claims

1. A method for low power verification of a circuit description, the method comprising:
- minimizing a circuit description by creating a plurality of crossover trees; and
- evaluating each of the plurality of crossover trees to identify circuit description errors, in particular low power circuit description errors.

2. The method according to claim 1, wherein the minimizing step comprises creating a plurality of crossover trees to represent the circuit description, each crossover tree having a unique set of selected ports and gates of the circuit description.

3. The method according to claim 2, wherein the evaluating step comprises evaluating, for each of the plurality of crossover trees, the circuit functions of the selected ports and gates for at least one of a selected plurality of circuit parameters, and identifying low power errors in the circuit description based on the evaluation.

4. The method according to claim 3, wherein identifying low power errors comprises providing a set of rules and evaluating the circuit functions of the selected ports and gates to at least one of the rules in the set of rules for each of the plurality of circuit parameters.

5. The method according to one of claims 1 to 4, wherein creation of each of the plurality of crossover trees comprises:
- identifying power domain boundary ports in the circuit design;
- for each identified power domain boundary port, checking whether said port is already covered by any other crossover tree, and if said port is not covered by any other crossover tree:
- tracing a circuit path of the circuit description backwards from said port;
- stop tracing backwards when a complex gate is found on the circuit path or when a primary input of the overall circuit design is reached;
- marking the backward stopping node on the circuit design as a root node of the crossover tree;
- tracing forward from said root node, and continue tracing until a complex logic gate is found or a primary output of the overall circuit design is reached;
- marking the forward stopping node on the circuit design as one of a number of sink nodes of the crossover tree; and
- repeating the forward tracing from said root node until all possible circuit paths from said root node are traced.

6. The method according to claim 5, wherein
- said port, from which the backward tracing starts, is marked as covered by the current crossover tree; and
- during the forward tracing, when a power domain boundary port is found, said port is marked as covered by the current crossover tree.

7. The method according to claim 5 or 6, wherein each crossover tree is formed for the following elements:
- the root node of the crossover tree;
- all sink nodes of the crossover tree;
- all power domain boundary ports of the crossover tree, which have an isolation specification and/or a level-shifter specification;
- all isolation cells of the crossover tree;
- all level-shifter cells of the crossover tree;
- all buffer cell chains of the crossover tree having a supply change between their ends; and
- all inverter cell chains of the crossover tree having a supply change between their ends.

8. The method according to one of claims 1 to 7, further comprising displaying identified low power errors.

9. The method according to one of claims 1 to 8, further comprising evaluating the plurality of crossover trees and identifying low power errors in the circuit description in parallel.

10. The method according to one of claims 1 to 9, wherein the plurality of crossover trees is created from one of the following:
- from a register-transfer level, RTL, description;
- from a hardware description language, HDL, description;
- from a netlist description;
- from a placed and routed, P&R, netlist description.

11. The method according to one of claims 1 to 10, wherein the evaluation is tree based and not path based.

12. The method according to one of claims 1 to 11, wherein the circuit description errors to be identified are low power violations of the circuit description.

13. A method for low power verification of a circuit description comprising generating a compact design representation of groups of interesting nodes and evaluating the groups of interesting nodes in parallel, wherein the compact design representation is independent of a low power specification language.

14. A system for automating a minimization of a circuit description for evaluation purposes, in particular low power error evaluation purposes, the system having a processor being adapted to minimize the circuit description by creating a plurality of crossover trees, wherein creation of each of the plurality of crossover trees comprises:
- identifying power domain boundary ports in the circuit design;
- for each identified power domain boundary port, checking whether said port is already covered by any other crossover tree, and if said port is not covered by any other crossover tree:
- tracing a circuit path of the circuit description backwards from said port;
- stop tracing backwards when a complex gate is found on the circuit path or when a primary input of the overall circuit design is reached;
- marking the backward stopping node on the circuit design as a root node of the crossover tree;
- tracing forward from said root node, and continue tracing until a complex logic gate is found or a primary output of the overall circuit design is reached;
- marking the forward stopping node on the circuit design as one of a number of sink nodes of the crossover tree; and
- repeating the forward tracing from said root node until all possible circuit paths from said root node are traced.

15. A computer program product comprising a code, said code being configured to implement a method according to one of claims 1 to 13.
